# EUROPEAN PATENT APPLICATION

(11) **EP 1 860 212 A1**
(43) Date of publication of application: **28.11.2007**
(21) Application number: 06728822.5
(22) Date of filing: 09.03.2006
(51) Int. Cl.: C25D 21/12, C25D 11/02, G01B 11/06, H01L 21/316

(54) **BASE MATERIAL PROCESSING APPARATUS AND BASE MATERIAL PROCESSING METHOD**

(30) Priority: 10.03.2005 JP 2005067623; 09.03.2006 JP 2006063860
(71) Applicant: Fujifilm Corporation, Tokyo 1068620 (JP)
(72) Inventor: TOMARU, Yuichi, Ashigarakami-gun, Kanagawa 258-8577 (JP)
(74) Representative: Klunker . Schmitt-Nilson . Hirsch
(86) International application number: PCT/JP2006/304605
(87) International publication number: WO 2006/095817

(57) **Abstract**

A base material processing apparatus (1) comprises a device (50) for irradiating light (L) from a light transmissive film side to a base material (10) during film formation on a surface of the base material (10) or film processing of the film formed on the surface of the base material (10). The apparatus (1) also comprises film physical characteristic measuring device (60) for receiving reflected light (R) of the light (L) coming from the base material (10) during the film formation or the film processing, detecting interference light formed by first reflected light and second reflected light contained in the reflected light (R), the first reflected light being reflected from a surface of the film, the second reflected light being reflected from an interface between the f i lm and the base material (10), and measuring a physical characteristic of the film with a peak valley technique.

## Description

### Technical Field

This invention relates to a base material processing apparatus for carrying out film formation of a light transmissive film on a surface of a base material, or for carrying out film processing of the light transmissive film having been formed on the surface of the base material. This invention also relates to a base material processing method utilizing the base material processing apparatus. This invention particularly relates to controlling of a film physical characteristic of the light transmissive film.

### Background Art

Anodic oxidation processing is a technique, wherein a base material, such as aluminum, is utilized as an anode and is immersed in an electrolyte together with a cathode, wherein a voltage is applied across the anode and the cathode, and wherein a metal oxide film, such as an alumina film, is thereby formed. With the anodic oxidation processing, a film in whichnano-order fine holes are arrayed regularly is capable of being formed. Therefore, for example, studies have heretofore been made to apply the anodic oxidation processing to starting materials for electronic devices, optical devices, and the like. (Reference may be made to, for example, Japanese Unexamined Patent Publication No. 2002-004087.)

Heretofore, control of a film thickness in the anodic oxidation processing has been performed with a technique, wherein anodic oxidation conditions, such as an electric current density and electrolysis time, are set at certain conditions, wherein the anodic oxidation processing is performed under the thus set conditions, wherein the film thickness of a metal oxide film having been formed with the anodic oxidation processing is measured, and wherein the measured value of the metal oxide film having been formed with the anodic oxidation processing is fed back to the anodic oxidation conditions. Specifically, the control of the film thickness in the anodic oxidation processing has heretofore been performed with the technique, wherein the experiments are iterated, wherein the anodic oxidation conditions, under which the metal oxide filmhaving a desired thickness is capable of being formed, are derived from the results of the experiments, and wherein the anodic oxidation processing is performed under the thus derived anodic oxidation conditions. Also, confirmation as to whether the metal oxide film having the desired thickness has or has not been formed has heretofore been made in accordance with the result of the film thickness measurement after the film formation has been finished.

The metal oxide film, such as an alumina film, which is formed with the anodic oxidation processing, has light transmissivity. As a film thickness measuring device for the light transmissive film, there has been proposed a device constituted such that an effect of interference of first reflected light, which has been reflected from a surface of the light transmissive film, and second reflected light, which has been reflected from an interface between the light transmissive film and a base material (in the cases of the anodic oxidation processing, an un-anodized part), with each other is detected, and such that the film thickness of the light transmissive film is measured by use of a peak valley technique. (The proposed film thickness measuring device is disclosed in, for example, Japanese Unexamined Patent Publication No. 9(1997)-243332.)

### Disclosure of Invention

### Problems Which the Invention Aims at Solving

With the conventional technique for the film thickness control described above, it is necessary for the experiments to be iterated till the anodic oxidation conditions, under which the metal oxide film having the desired thickness is capable of being formed, are derived from the results of the experiments. With the conventional technique for the film thickness control described above, in cases where the value of the desired thickness is altered, it is necessary for new experiments to be made. Therefore, with the conventional technique for the film thickness control described above, the efficiency is not capable of being kept high.

Also, as for electronic devices and optical devices, a dimensional accuracyof the nano-scale level is requiredof the devices. However, since the anodic oxidation reaction is susceptible to various effects, in cases where the anodic oxidation conditions, under which the metal oxide film having the desired thickness is capable of being formed, have been derived, it is not always possible to achieve perfect reproduction of the identical conditions, and it is not always possible to control the film thickness on the nano-scale level.

In order for the film thickness to be controlled accurately, the film thickness should preferably be measured on the real time basis, and the reaction should preferably be ceased at the time at which the desired thickness has been obtained. However, with the conventional film thickness measuring device, such as the device described in, for example, Japanese Unexamined Patent Publication No. 9(1997)-243332, though the measurement of the film thickness is capable of being performed after the film formation has been finished or by ceasing the film formation during the film forming operation, the real time measurement of the film thickness is not capable of being performed.

Further, in cases where solution etching processing is performed on the metal oxide filmhavingbeen formed, the hole diameters of the fine holes are capable of being set to be large. In such cases, it is preferable that the real time measurement of the hole diameters is capable of being performed.

In view of the above circumstances, the object of the present invention is to provide a base material processing apparatus and a base material processing method, in which film formation of a light transmissive film on a surface of a base material, or film processing of the light transmissive film having been formed on the surface of the base material is carried out, in which a film physical characteristic of the light transmissive film, such as a filmthickness or a hole diameter, is capable of being measured on a real time basis, and inwhich the filmphysical characteristic of the light transmissive film is capable of being controlled accurately.

### Means for Solving the Problems

The present invention provides a base material processing apparatus for carrying out film formation of a light transmissive filmon a surface of abasematerial, or for carrying out filmprocessing of the light transmissive film having been formed on the surface of the base material, the apparatus comprising:
i) light irradiating means for irradiating light from the side of the light transmissive film to the base material, which is being subjected to the film formation or the film processing, and
ii) film physical characteristic measuring means for:
   a) receiving reflected light of the light having been irradiated by the light irradiating means, the reflected light coming from the base material, which is being subj ected to the film formation or the film processing,
   b) detecting interference light formed by interference of first reflected light and second reflected light, which are contained in the reflected light having been received, with each other, the first reflected light having been reflected from a surface of the light transmissive film, the second reflected light having been reflected from an interface between the light transmissive film and the base material, and
   c) measuring a filmphysical characteristic of the light transmissive film, which is being subjected to the film formation or the film processing, the measurement being made by use of a peak valley technique.

The term "film formation of a light transmissive film" as used herein embraces both the cases wherein the base material is caused to undergo a chemical change, and wherein a part of the base material is thereby converted into the light transmissive film (e.g., as in the cases of the film formation with anodic oxidation processing), and the cases wherein the base material is not subjected to a change, and wherein the light transmissive film is deposited on the surface of the base material. In cases where the base material is caused to undergo a chemical change, and a part of the base material is thereby converted into the light transmissive film, the term "second reflected light having been reflected from an interface between a light transmissive film and a base material" as used herein means the light reflected from the interface between the light transmissive film and the part of the base material, which part remains without being caused to undergo the chemical change.

The base material processing apparatus in accordance with the present invention may be modified such that the film physical characteristic, which is measured by the filmphysical characteristic measuring means, is a film thickness or a hole diameter.

The base material processing apparatus in accordance with the present invention should preferably be modified such that the apparatus further comprises ceasing means for ceasing the film formation or the film processing at the time at which a value of the film physical characteristic having been measured by the film physical characteristic measuring means has become equal to a desired value.

The base material processing apparatus in accordance with the present invention is capable of being applied appropriately, for example, in cases where the base material is a metal body to be subj ected to anodic oxidation processing, and the light transmissive film is a metal oxide film, which is formed with the anodic oxidation processing.

Also, the base material processing apparatus in accordance with the present invention should preferably be modified such that the light irradiating means irradiates single wavelength light, and the film physical characteristic measuring means detects an optical intensity of the interference light. Further, the base material processing apparatus in accordance with the present invention should preferably be modified such that the light irradiating means irradiates broad light, and the film physical characteristic measuring means is means for separating the reflected light into spectral components of the reflected light, detecting a wavelength associated with an interference peak or an interference valley, and measuring the film physical characteristic of the light transmissive film in accordance with the wavelength having thus been detected.

The term "single wavelength light" as used herein means the light having a wavelength distribution such that a half-width falls within the range of center wavelength ± 0.5nm. Also, the term "broad light" as used herein means the light having a wavelength distribution broader than the wavelength distribution of the single wavelength light.

The present invention also provides a base material processing method for carrying out film formation of a light transmissive film on a surface of a base material, or for carrying out film processing of the light transmissive film having been formed on the surface of the base material, the method comprises the steps of:
i) irradiating light from the side of the light transmissive filmtothebasematerial, which is being subj ectedto the film formation or the film processing,
ii) receiving reflected light of the light having been irradiated by the light irradiating means, the reflected light coming from the base material, which is being subj ected to the film formation or the film processing,
iii) detecting interference light formed by interference of first reflected light and second reflected light, which are contained in the reflected light having been received, with each other, the first reflected light having been reflected from a surface of the light transmissive film, the second reflected light having been reflected from an interface between the light transmissive film and the base material,
iv) measuring a film physical characteristic of the light transmissive film, which is being subjected to the film formation or the film processing, the measurement being made by use of a peak valley technique, and
v) ceasing the film formation or the film processing at the time at which a value of the film physical characteristic having been measured has become equal to a desired value.

### Effects of the Invention

The base material processing apparatus in accordance with the present invention has the constitution comprising the light irradiating means for irradiating the light from the side of the light transmissive film to the base material, which is being subjected to the film formation or the film processing, and the film physical characteristic measuring means for receiving the reflected light of the light having been irradiated by the light irradiating means, the reflected light coming from the base material, which is being subjected to the film formation or the film processing, and measuring the film physical characteristic of the light transmissive film, which is being subjected to the film formation or the filmprocessing, the measurement being made by use of the peak valley technique.

With the base material processing apparatus having the constitution described above and with the base material processing method utilizing the base material processing apparatus, the film physical characteristic of the light transmissive film is capable of being measured on the real time basis during the film formation or during the film processing. Also, the reaction is capable of being ceased at the time at which the light transmissive film having the desired film physical characteristic has been formed. For example, as the film physical characteristic of the light transmissive film, the film thickness or the hole diameter is capable of being measured on the real time basis.

With the present invention, particular operations need not be performed for previously deriving the reaction conditions for obtaining the light transmissive filmhaving the desired filmphysical characteristic, and the film physical characteristic of the light transmissive film is capable of being controlled easily. With the present invention, wherein the particular operations need not be performed for previously deriving the reaction conditions, in cases where the desired film physical characteristic is altered, it is possible to cope quickly with the alteration of the desired film physical characteristic. Also, with the present invention, wherein the film physical characteristic of the light transmissive film is measured on the real time basis in every base material processing, the film physical characteristic of the light transmissive film is capable of being controlled accurately. It is further possible to perform the nano-scale level of the film physical characteristic control. Furthermore, with the present invention, wherein the light transmissive film having the desired film physical characteristic is capable of being formed reliably, a process for inspecting the film physical characteristic after the base material processing has been finished need not be performed.

### Brief Description of Drawings

Figure 1A is a perspective view showing an embodiment of the base material processing apparatus in accordance with the present invention,
Figure 1B is a schematic view showing an example of construction of light irradiating means,
Figure 1C is a schematic view showing an example of design modification,
Figure 2A is a perspective view showing a metal body to be subjected to the anodic oxidation processing, which metal body is in a state before the anodic oxidation processing is performed,
Figure 2B is a perspective view showing a metal body to be subjected to the anodic oxidation processing, which metal body is in a state while the anodic oxidation processing is being performed,
Figure 3 is a schematic sectional view showing a principle of film physical characteristic measurement in the present invention,
Figure 4 is a graph showing examples of film thickness measurements, and
Figure 5 is a graph showing examples of film thickness measurements.

### Best Mode for Carrying Out the Invention

An embodiment of the base material processing apparatus in accordance with the present invention and an embodiment of the base material processing method utilizing the base material processing apparatus will hereinbelow be described in further detail with reference to the accompanying drawings. In the embodiment described below, bywayof example, an alumina film is formed with anodic oxidation processing. The embodiment of the base material processing apparatus is provided with a film physical characteristic control system for measuring the film physical characteristic of the alumina film on the real time basis and controlling the film physical characteristic.

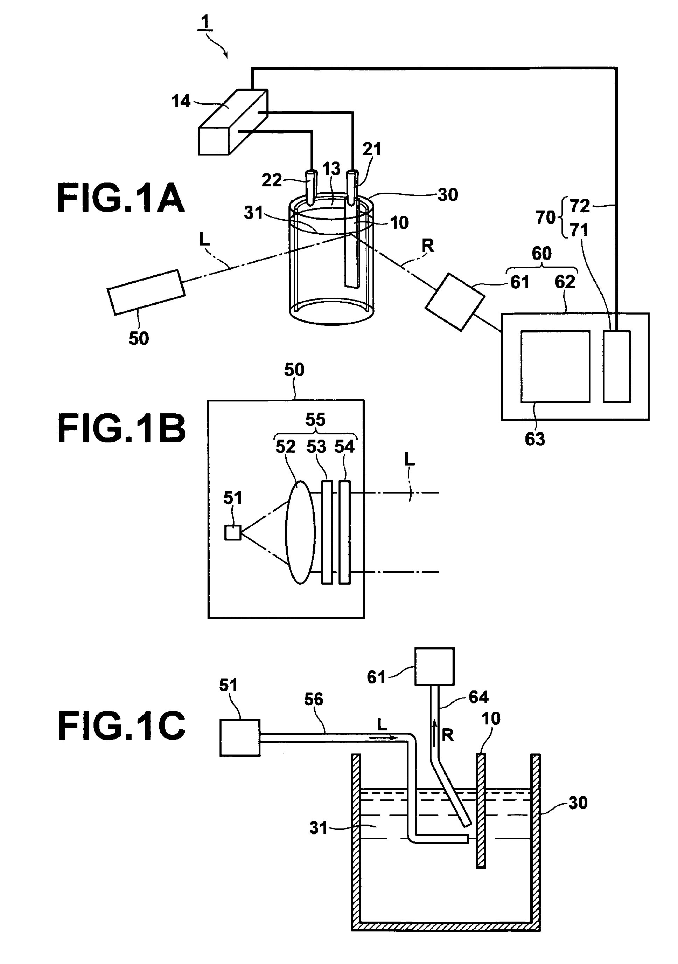

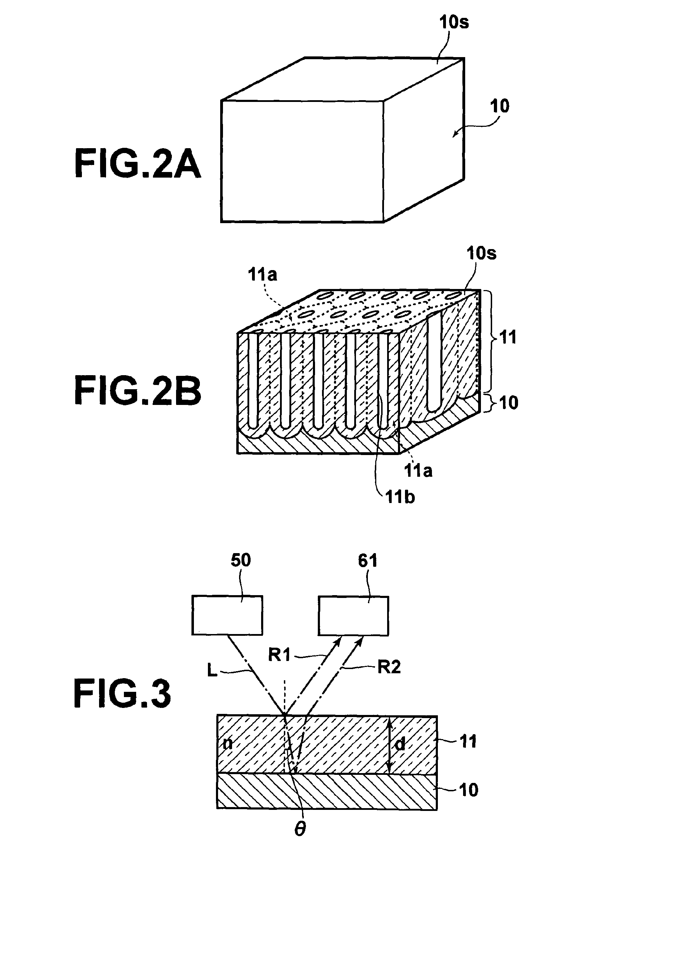

Figure 1A is a perspective view showing an embodiment of the base material processing apparatus in accordance with the present invention. Figure 1B is a schematic view showing an example of construction of light irradiating means. Figure 2A and Figure 2B are perspective views showing anodic oxidation processes. Figure 3 is a schematic sectional view showing a principle of film physical characteristic measurement in the present invention. Ordinarily, the thickness of the alumina film, which is formed, is smaller than the thickness of the un-anodized part of the metal body to be subj ected to the anodic oxidation processing. However, in Figure 2B and Figure 3, the alumina film is illustrated as having a large thickness for clearness.

As illustrated in Figure 1A, in this embodiment of abasematerial processing apparatus 1, the anodic oxidation processing is performed in the manner described below. Specifically, a metal body (a base material) 10 to be subjected to the anodic oxidation processing is set as an anode and is immersed together with a cathode (an opposite electrode) 13 in an electrolyte 31. In this state, a voltage is applied between the anode and the cathode, and the anodic oxidation processing is performed on the metal body 10 to be subjected to the anodic oxidation processing. In this manner, an alumina film 11 (a metal oxide film, as illustrated in Figure 2B) is formed on the surface of the metal body 10 to be subjected to the anodic oxidation processing.

As the metal body 10 to be subjected to the anodic oxidation processing, a metal body, which contains aluminum (Al) as a principal constituent and may contain impurities, is utilized. No limitation is imposed upon the shape of the metal body 10 to be subjected to the anodic oxidation processing. By way of example, the metal body 10 to be subjected to the anodic oxidation processing may have a plate-like shape. Alternatively, the metal body 10 to be subjected to the anodic oxidation processing may be utilized in a form provided with a support. For example, the metal body 10 to be subjected to the anodic oxidation processing may be formed in a layer shape on a support and may be utilized in this form. The cathode 13 may be constituted of carbon, aluminum, or the like, and the shape of the cathode 13 may be designed arbitrarily. The term "principal constituent" as used herein means that the purity of the principal constituent is equal to at least 90%.

The base material processing apparatus 1 is provided with a reaction vessel 30, in which at least a part of the metal body 10 to be subjected to the anodic oxidation processing and at least a part of the cathode 13 are accommodated, and in which the film formation is performed. The electrolyte 31 for the anodic oxidation processing is filled in the reaction vessel 30. The metal body 10 to be subj ected to the anodic oxidation processing is supported by a holder 21, such that at least the bottom end part of the metal body 10 to be subjected to the anodic oxidation processing may be immersed in the electrolyte 31. Also, the cathode 13 is supported by a holder 22, such that at least the bottom end part of the cathode 13 may be immersed in the electrolyte 31. The holder 21 and the holder 22 have electrical conductivity and are connected to a voltage applying electric source 14 for applying the voltage between the metal body 10 to be subjected to the anodic oxidation processing and the cathode 13.

Also, no limitation is imposed upon the kind of the electrolyte 31. However, the electrolyte 31 should preferably be an acidic electrolyte containing at least one kind of an acid selected from the group consisting of sulfuric acid, phosphoric acid, chromic acid, oxalic acid, sulfamic acid, benzenesulfonic acid, and amidosulfonic acid. The reaction vessel 30 is located within a constant temperature bath (not shown). The constant temperature bath is located on a magnetic stirrer (not shown), such that the electrolyte 31 is capable of being stirred, and such that the temperature of the electrolyte 31 is capable of being adjusted. Systems for the stirring of the electrolyte 31 and for the adjustment of the temperature of the electrolyte 31 may be designed arbitrarily.

As illustrated in Figure 2B, in cases where the anodic oxidation processing is performed on the metal body 10 to be subjected to the anodic oxidation processing, the oxidation reaction advances from a surface 10s of the metal body 10 to be subjected to the anodic oxidation processing, which surface is located on the side of the alumina formation, (in the cases of Figure 2B, the top surface of the metal body 10 to be subjected to the anodic oxidation processing) toward the direction approximately normal to the surface 10s. An alumina film 11 is formed in this manner. The alumina film 11 having been formed with the anodic oxidation processing has a structure, in which a plurality of fine pillar-shaped bodies 11a, 11a, ... having approximately regular hexagon shapes, as viewed from above, are arrayed without a spacing being left among them. At an approximately middle area of each of the fine pillar-shaped bodies 11a, 11a, ..., a fine hole 11b extending approximately straightly in the depth direction from the surface 10s is formed. Also, a bottom surface of each of the fine pillar-shaped bodies 11a, 11a, ... has a round shape. The structure of the alumina film, which is formed with the anodic oxidation processing, is described in, for example, "Preparation of Meso-porous Alumina with Anodic oxidation technique and Application as Functional Materials" by Hideki Masuda, Material Technology, Vol. 15, No. 10, p. 34, 1997.

The conditions for the anodic oxidation processing are not limited to specific conditions and may be designed in accordance with the use application of the alumina film 11, and the like. By way of example, incases where oxalic acid is utilized as the electrolyte, the conditions for the anodic oxidation processing at the time of the formation of the alumina having the regular array structure should preferably be set such that the electrolyte concentration may be 0.5M, the electrolyte temperature may fall within the range of 14°C to 16°C, and the applied voltage may fall within the range of 40V to 40±0.5V.

The filmphysical characteristic control system for the alumina film 11 will be described hereinbelow.

In this embodiment, by the utilization of the characteristics such that the metal body 10 to be subjected to the anodic oxidation processing, which metal body acts as the base material, contains aluminum as the principal constituent and does not have the light transmissivity, and such that the alumina film 11 formed with the anodic oxidation processing has the light transmissivity, the film physical characteristic of the alumina film 11 is measured on the real time basis by use of the peak valley technique.

As illustrated in Figure 1A, this embodiment of thebasematerial processing apparatus 1 comprises light irradiating means 50 for irradiating light L from the side of the alumina film 11 to the metal body 10 to be subjected to the anodic oxidation processing, which metal body is being subjected to the film formation. The base material processing apparatus 1 also comprises film physical characteristic control means 60. The film physical characteristic control means 60 receives reflected light R of the light L having been irradiated by the light irradiating means 50, the reflected light R coming from the metal body 10 to be subjected to the anodic oxidation processing, which metal body is being subjected to the film formation. The film physical characteristic control means 60 thus detects the physical characteristic of the reflected light R and measures the film physical characteristic of the alumina film 11.

No limitation is imposed upon the kind of the film physical characteristic, which is measured by the film physical characteristic controlmeans 60. Bywayof example, the filmphysical characteristic may be a film thickness d.

The light irradiating means 50 and the film physical characteristic control means 60 are located on the side outward from the reaction vessel 30. The reaction vessel 30 is constituted such that at least a region of the reaction vessel 30, through which region the irradiated light L is to pass, and a region of the reaction vessel 30, through which region the reflected light R is to pass, have the light transmissivity. Specifically, the light irradiating means 50 irradiates the light L from the side outward from the reaction vessel 30, through the corresponding light transmissive region of the reaction vessel 30, and to the metal body 10 to be subjected to the anodic oxidation processing. Also, the film physical characteristic control means 60 receives the reflected light R, which has passed through the corresponding light transmissive region of the reaction vessel 30.

The combination of the light irradiating means 50 and the film physical characteristic control means 60 maybe designed arbitrarily.

By way of example, as illustrated in Figure 1B, the light irradiating means 50 may comprise one light source 51 and a light regulating system 55 for regulating the light, which has been produced by the light source 51, and obtaining the light L appropriate for the measurement. No limitation is imposed upon the kind of the light source 51. For example, the light source 51 maybe a laser for producing single wavelength light or a white light source (such as a tungsten lamp) for producing broad light.

In cases where the white light source is utilized as the light source 51, the light regulating system 55 may be constituted of, for example, a collimator lens 52 for collimating the light having been produced by the light source 51 and, when necessary, a combination of a polarizer 53 for converting the collimated light into a specific polarized light / a bandpass filter 54 of a narrowband for transmitting specific wavelength light alone / a converging lens (not shown), and the like. In cases where the laser is utilized as the light source 51, the band pass filter 54 of the light regulating system 55 may be omitted.

The film physical characteristic control means 60 measures the film physical characteristic, such as the film thickness d, of the alumina film 11 by use of the peak valley technique.

As illustrated in Figure 3, the reflected light R coming from the metal body 10 to be subjected to the anodic oxidation processing, which metal body is being subjected to the film formation, contains first reflected light R1 and second reflected light R2. The first reflected light R1 has been reflected from the surface of the alumina film 11. The second reflected light R2 has been reflected from the interface between the alumina film 11 and the metal body 10 to be subjected to the anodic oxidation processing (specifically, the un-anodized part of the metal body 10 to be subjected to the anodic oxidation processing, which un-anodized part remains without being converted into the alumina film 11). The second reflected light R2 travels to the interface between the alumina film 11 and the un-anodized part and then from the interface through the alumina film 11. Therefore, the optical path of the second reflected light R2 becomes longer than the optical path of the first reflected light R1, and the phases of the first reflected light R1 and the second reflected light R2 shift from each other. As a result, interference light occurs due to interference between the first reflected light R1 and the second reflected light R2.

A phase difference Φ between the first reflected light R1 and the second reflected light R2 maybe represented by the general formula Φ=4nndcosθ/λ, wherein λ represents the wavelength of the incident light, n represents the mean refractive index (1.77) of the alumina film, and θ represents the angle of refraction of the alumina film (cosθ=0.975). As an aid in facilitating the explanation, the presence of the fine holes within the alumina film, which fine holes act as voids, is ignored, and the refractive index of alumina itself is herein taken as the value of the mean refractive index n of the alumina film.

As for the actual reflection, it is necessary for a phase shift due to reflection to be taken into consideration. However, as an aid in facilitating the explanation, it is herein assumed that each of the first reflected light R1 and the second reflected light R2 shifts in phase by n at the time of the reflection.

At the time at which the phase difference Φ between the first reflected light R1 and the second reflected light R2 is equal to 2mn, the optical intensity of the interference light becomes maximum (bright state) (interference peak) . At the time at which the phase difference Φ between the first reflected light R1 and the second reflected light R2 is equal to (2m+1)π, the optical intensity of the interference light becomes minimum (dark state) (interference valley). In the formulas shown above, m represents the integral number (0, ±1, ±2, ...).

The phase difference Φ=4nndcose/λ between the first reflected light R1 and the second reflected light R2 alters in accordance with the film thickness d of the alumina film 11. Therefore, the interference conditions alter in accordance with the film thickness d of the alumina film 11.

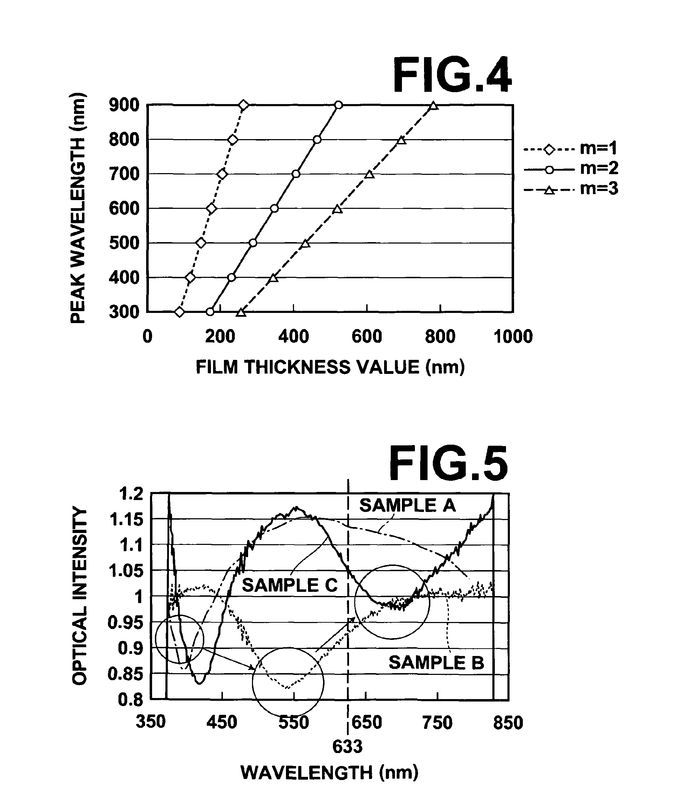

The film thickness d of the alumina film 11 may be represented by the formula d=mxλ1/(2ncosθ), wherein λ1 represents the peak wavelength. For example, in cases where the peak wavelength λ1 is equal to 600nm, the film thickness d of the alumina film 11 may be represented by the formula d=173.8×m (nm). The value of m corresponds to the number of times of the occurrence of the interference peak. By way of example, the relationships among the peak wavelength, the number of times m of the occurrence of the interference peak, and the film thickness d of the alumina film 11 may be as illustrated in Figure 4. As described above, the film thickness d of the alumina film 11 is capable of being measured in accordance with the peak wavelength. Also, the film thickness d of the alumina film 11 is capable of being measured in accordance with the valley wavelength.

By way of example, the single wavelength light having the peak wavelength or the valley wavelength may be employed as the irradiated light L. Also, as illustrated in Figure 1A, the film physical characteristic control means 60 may be constituted of a detector 61, such as a photodiode, which receives the reflected light R and detects the optical intensity of the reflected light R, and a film physical characteristic measuring device 62, which is provided with a data processing section 63 for calculating the film physical characteristic, such as the film thickness d, from the detection data obtained from the detector 61. In this manner, the alteration of the optical intensity of the reflected light R (the interference light) may be detected on the real time basis. In such cases, the film physical characteristic, such as the film thickness d, is capable of being measured on the real time basis.

In cases where the irradiated light L is the broad light, the reflected light R (the interference light) may be separated into its spectral components, the intensity of each of the spectral components may be detected, and the wavelength associated with the interference peak or the interference valley may thereby be found. In this manner, the film physical characteristic, such as the film thickness d, is capable of being measured on the real time basis. In such cases, the film physical characteristic control means 60 may be constituted of a spectroscope (not shown) for separating the reflected light R into its spectral components and obtaining a spectrum, the detector 61, such as a charge coupled device (CCD) , for detecting the intensity of each of the spectral components, and the filmphysical characteristic measuring device 62, which is provided with the data processing section 63 for calculating the film physical characteristic, such as the film thickness d, from the detection data obtained from the detector 61.

Also, the film thickness d is capable of being calculated from an arbitrary wavelength other than the peak wavelength and the valley wavelength.

Figure 5 shows measurement examples obtained in cases where the measurement of the reflected light intensity is made with respect to each of alumina films 11, 11, ... havingdifferent filmthicknesses. Figure 5 illustrates the measurement examples with respect to the alumina film 11 in which the film thickness d = 150nm (sample A), the alumina film 11 in which the film thickness d = 215nm (sample B), and the alumina film 11 in which the film thickness d = 285nm (sample C). In the measurement examples illustrated in Figure 5, the spectrum of the reflected light intensity is formed with a sample having a film thickness of 0nm being taken as a reference. As illustrated in Figure 5, the peak wavelength and the valley wavelength alter in accordance with the alteration of the film thickness. For example, in cases where attention is given to an arbitrary wavelength of 633nm, in accordance with the alteration of the film thickness value from 150nm to 215nm and to 285nm, the optical intensity alters from 1.14 to 0.93 and to 1.05. Specifically, in cases where attention is given to an arbitrary specific wavelength, in accordance with the alteration of the film thickness, the optical intensity alters with oscillation. Therefore, the film thickness d is capable of being measured in accordance with the number of times of the oscillation and the optical intensity.

In cases where the measurement is performed in the same manner as that described above with respect to two wavelengths (e.g., 633nm and 785nm), it is possible to find easily that, at the time at which the intensities coincide with respect to both the wavelengths, an absorption wavelength is located at the center wavelength. The measurement efficiency is thus capable of being kept high. Also, with respect to a fine intensity alteration, a more accurate measurement is capable of being performed.

In lieu of the measurement of the reflected light intensity beingmade with respect to the peak wavelength or the valley wavelength, the measurement of the reflected light intensity may be made with respect to an arbitrary wavelength (an inflection point) between the peak wavelength and the valley wavelength. It is assumed that, in such cases, a larger alteration of the optical intensity will be observed, and the measurement will be capable of being made with a higher sensitivity than in cases where the measurement of the reflected light intensity is made with respect to the peak wavelength or the valley wavelength.

In this embodiment, the base material processing apparatus 1 further comprises ceasing means 70 for automatically ceasing the film formation at the time at which the film physical characteristic value (e.g., the film thickness value) having been measured by the filmphysical characteristic control means 60 reaches a desired value.

Specifically, the ceasing means 70 comprises a control section 71, which is accommodated in the film physical characteristic measuring device 62. At the time at which the film physical characteristic value having been measured reaches the desired value, the control section 71 transfers a signal through a signal transfer line 72 to the voltage applying electric source 14 and automatically turns off the voltage applying electric source 14.

Also, there is the risk that, after the voltage application has been ceased, the film formation reaction will advance slightly in the state in which the metal body 10 to be subjected to the anodic oxidation processing is immersed in the electrolyte 31. Therefore, the ceasing means 70 should preferably be provided with a system (not shown) for automatically pulling up the metal body 10 to be subjected to the anodic oxidation processing from the electrolyte 31 and thereby automatically ceasing the reaction perfectly at the time at which the film physical characteristic value having been measured reaches the desired value.

In this embodiment, the base material processing apparatus 1 comprises the light irradiating means 50 for irradiating the light L to the metal body 10 to be subjected to the anodic oxidation processing (the base material), which metal body is being subjected to the film formation. The base material processing apparatus 1 also comprises the film physical characteristic control means 60. The film physical characteristic control means 60 receives the reflected light R of the light L having been irradiated by the light irradiating means 50, the reflected light R coming from the metal body 10 to be subjected to the anodic oxidationprocessing, whichmetal body is being subj ected to the film formation. The filmphysical characteristic control means 60 thus measures the film physical characteristic, such as the film thickness d, of the alumina film (the light transmissive film) 11 by use of the peak valley technique.

With the base material processing apparatus 1 having the constitution described above, the light L is capable of being irradiated to the metal body 10 to be subjected to the anodic oxidation processing, which metal body is being subj ected to the film formation. Also, the reflected light R coming from the metal body 10 to be subj ected to the anodic oxidationprocessing, whichmetal body is being subj ected to the film formation, is capable of being received. Further, the interference light occurring from the interference of the first reflected light R1, which has been reflected from the surface of the alumina film 11 and is contained in the reflected light R, and the second reflected light R2, which has been reflected from the interface between the alumina film 11 and the metal body 10 to be subjected to the anodic oxidation processing and is contained in the reflected light R, is capable of being detected. The filmphysical characteristic, such as the film thickness d, of the alumina film 11, which is being formed, is capable of being measured on the real time basis by use of the peak valley technique. Furthermore, the film formation is capable of being ceased at the time at which the film physical characteristic value having been measured reaches the desired value.

With this embodiment, particular operations need not be performed for previously deriving the reaction conditions, under which the alumina film 11 having the desired film physical characteristic is capable of being formed, and the film physical characteristic of the alumina film 11 is capable of being controlled easily. With this embodiment, wherein the particular operations need not be performed for previously deriving the reaction conditions, in cases where the desired film physical characteristic is altered, it is possible to cope quickly with the alteration of the desired film physical characteristic. Also, with this embodiment, wherein the film physical characteristic of the alumina film 11 is measured on the real time basis in every base material processing, the film physical characteristic of the alumina film 11 is capable of being controlled accurately. It is further possible to perform the nano-scale level of the film physical characteristic control. Furthermore, with this embodiment, wherein the alumina film 11 having the desired film physical characteristic is capable of being formed reliably, a process for inspecting the film physical characteristic after the base material processing has been finished need not be performed.

Particularly, in this embodiment, the base material processing apparatus 1 is provided with the ceasing means 70. At the time at which the film physical characteristic value having been measured by the film physical characteristic control means 60 reaches the desired value, the ceasingmeans 70 automatically turns off the voltage applying electric source 14 and automatically ceases the film formation. Therefore, the reaction is capable of being ceased immediately when the film physical characteristic value reaches the desired value. Accordingly, the control of the film physical characteristic is capable of being performed accurately.

The film formation should preferably be ceased automatically in accordance with the results of the measurement performed by the film physical characteristic control means 60. Alternatively, in accordance with the results of the measurement performed by the film physical characteristic control means 60, the operator may manually turn off the voltage applying electric source 14 and may pull up the metal body 10 to be subjected to the anodic oxidation processing from the electrolyte 31. In such cases, the apparatus should preferably be constituted such that, at the time at which the film physical characteristic value having been measured reaches the desired value,the film physical characteristic control means 60 automatically gives a sign for indicating reaction ceasing to the operator.

In the embodiment described above, the light irradiation and the light receiving are performed from the side outward from the reaction vessel 30. Alternatively, the light irradiation and/or the light receiving maybe performed from the side inward from the reaction vessel 30.

Specifically, as illustrated in Figure 1C, the light irradiating means 50 may be constituted such that the light L is irradiated from the side inward from the reaction vessel 30 through light guiding means 56, such as an optical fiber, which guides the light having been radiated out from the light source 51 (or the light regulating system 55). In such cases, at least a light radiating end of the light guiding means 56 is inserted into the reaction vessel 30. Also, the film physical characteristic control means 60 may be constituted such that the reflected light R is received from the side inward from the reaction vessel 30 through light guiding means 64, such as an optical fiber, which has a light entry end having been inserted into the reaction vessel 30 and which guides the reflected light R to the detector 61. In Figure 1C, the reaction vessel 30 and the region within the reaction vessel 30 are illustrated by the sectional view.

In cases where the light irradiation and light receiving are performed such that the light need not pass through the wall of the reaction vessel 30, the reaction vessel 30 need not have the light transmissive regions, and an arbitrary reaction vessel is capable of being utilized. Also, in such cases, the light irradiation and light receiving are capable of being performed instead of being affected by the reflection, the refraction, or the like, at the wall of the reaction vessel 30, and therefore accurate measurement is capable of being performed.

In this embodiment, the detector 61 and the film physical characteristic measuring device 62, which together constitute the film physical characteristic control means 60, are constituted as two independent units. Alternatively, the detector 61 may be incorporated in the film physical characteristic measuring device 62.

This embodiment of the base material processing apparatus 1 is capable of being utilized also as an apparatus for performing film processing of the alumina film 11, which has been formed, after the film formation with the anodic oxidation processing has been performed. In cases where the base material processing apparatus 1 is utilized as the apparatus for performing the film processing of the alumina film 11 having been formed, the real time measurement of the film physical characteristic of the alumina film 11 is capable of being performed.

For example, after the film formation has been finished, in lieu of the electrolyte 31, an etching liquid, such as an aqueous phosphoric acid solution, may be filled within the reaction vessel 30, and liquid etching processing may be performed at normal temperatures or under heating. In this manner, the hole diameters of the fine holes 11b, 11b, ... are capable of being set to be large. Depending upon the kind of the electrolyte 31, or the like, it may often occur that the electrolyte 31 is capable of being utilized directly as the etching liquid.

In cases where the hole diameters in the alumina film 11 are altered, the void volume within the alumina film 11 alters. Therefore, in such cases, the mean refractive index n of the alumina film 11 alters. The phase difference Φ between the first reflected light R1 and the second reflected light R2, which phase difference may be represented by the general formula Φ=4πndcosθ/λ, alters in accordance with the mean refractive index n of the alumina film 11. Therefore, in cases where the interference light occurring from the interference of the first reflected light R1 and the second reflected light R2 with each other is detected, the hole diameters in the alumina film 11 are capable of being measured on the real time basis by the film physical characteristic control means 60 and with the same measurement principle as the measurement of the film thickness d. In the measurement of the hole diameters in the alumina film 11, the film physical characteristic control means 60 may be constituted such that the data processing section 63 calculates the hole diameters in the alumina film 11.

In cases where the filmprocessing described above is performed, the film processing is capable of being ceased with an operation for pulling up the metal body 10 to be subjected to the anodic oxidation processing from the etching liquid. In such cases, the base material processing apparatus 1 should preferably be provided with means for automatically pulling up the metal body 10 to be subjected to the anodic oxidation processing from the etching liquid and thereby automatically ceasing the reaction perfectly at the time at which the hole diameters having been measured reach the desired value.

In this embodiment, the metal body 10 to be subjected to the anodic oxidation processing contains Al as the principal constituent. As the principal constituent of the metal body 10 to be subjected to the anodic oxidation processing, it is possible to employ an arbitrary metal, which is capable of undergoing the anodic oxidation processing and yields a metal oxide having the light transmissivity. For example, besides A1, Ti, Ta, Hf, Zr, Si, In, or Zn is capable of being employed as the principal constituent of the metal body 10 to be subjected to the anodic oxidation processing.

Besides the film formation of the light transmissive film with the anodic oxidation processing and the film processing of the light transmissive film having been formed, the present invention is also capable of being applied to arbitrary film formation, with which a light transmissive film is formed on a surface of a base material, and film processing of the light transmissive film having been formed. The present invention is applicable to the film formation (e.g., as in the cases of the film formation with the anodic oxidation processing), wherein the base material is caused to undergo a chemical change, and wherein a part of the base material is thereby converted into the light transmissive film. The present invention is also applicable to the film formation (as in the cases of the film formation with electrolytic plating or vapor phase deposition), wherein the base material is not subjected to a chemical change, and wherein a light transmissive material is deposited on the surface of the base material. The present invention is further applicable to the film processing of the light transmissive film having been formed in the manner described above.

### Industrial Applicability

The present invention is capable of applied appropriately to the base material processing apparatus for performing the film formation of the light transmissive film with the anodic oxidation processing, the electrolytic plating processing, or the like, or for performing the film processing of the light transmissive film having been formed.

## Claims

1. A base material processing apparatus for carrying out film formation of a light transmissive film on a surface of a base material, or for carrying out film processing of the light transmissive film having been formed on the surface of the base material, the apparatus comprising:
i) light irradiatingmeans for irradiating light from the side of the light transmissive film to the base material, which is being subjected to the film formation or the film processing, and
ii) film physical characteristic measuring means for:
a) receiving reflected light of the light having been irradiated by the light irradiating means, the reflected light coming from the base material, which is being subjected to the film formation or the film processing,
b) detecting interference light formed by interference of first reflected light and second reflected light, which are contained in the reflected light having been received, with each other, the first reflected light having been reflected from a surface of the light transmissive film, the second reflected light having been reflected from an interface between the light transmissive film and the base material, and
c) measuring a filmphysical characteristic of the light transmissive film, which is being subjected to the film formation or the film processing, the measurement being made by use of a peak valley technique.

2. A base material processing apparatus as defined in Claim 1 wherein the film physical characteristic, which is measured by the filmphysical characteristic measuring means, is a film thickness or a hole diameter.

3. A base material processing apparatus as defined in Claim 1 or 2 wherein the apparatus further comprises ceasing means for ceasing the film formation or the film processing at the time at which a value of the film physical characteristic having been measured by the film physical characteristic measuring means has become equal to a desired value.

4. A base material processing apparatus as defined in any of Claims 1, 2, and 3 wherein the base material is a metal body to be subjected to anodic oxidation processing, and the light transmissive film is a metal oxide film, which is formed with the anodic oxidation processing.

5. A base material processing apparatus as defined in any of Claims 1, 2, 3, and 4 wherein the light irradiating means irradiates single wavelength light, and the film physical characteristic measuring means detects an optical intensity of the interference light.

6. A base material processing apparatus as defined in any of Claims 1, 2, 3, and 4 wherein the light irradiating means irradiates broad light, and the film physical characteristic measuring means is means for separating the reflected light into spectral components of the reflected light, detecting a wavelength associated with an interference peak or an interference valley, and measuring the film physical characteristic of the light transmissive film in accordance with the wavelength having thus been detected.

7. A base material processing apparatus as defined in any of Claims 1 to 6 wherein the apparatus further comprises a reaction vessel, in which at least a part of the base material is accommodated, and in which the film formation or the film processing is performed, at least a partial region of the reaction vessel having light transmissivity, and
the light irradiating means irradiates the light to the base material from the side outward from the reaction vessel and through the light transmissive region of the reaction vessel.

8. A base material processing apparatus as defined in any of Claims 1 to 7 wherein the apparatus further comprises a reaction vessel, in which at least a part of the base material is accommodated, and in which the film formation or the film processing is performed, at least a partial region of the reaction vessel having light transmissivity, and
the film physical characteristic measuring means receives the reflected light, which has passed through the light transmissive region of the reaction vessel.

9. A base material processing apparatus as defined in any of Claims 1 to 6 and Claim 8 wherein the apparatus further comprises a reaction vessel, in which at least a part of the base material is accommodated, and in which the film formation or the filmprocessing is performed, and
the light irradiating means comprises a light source and light guiding means for guiding the light having been radiated out from the light source, at least a light radiating end of the light guiding means being inserted into the reaction vessel.

10. A base material processing apparatus as defined in any of Claims 1 to 7 and Claim 9 wherein the apparatus further comprises a reaction vessel, in which at least a part of the base material is accommodated, and in which the film formation or the film processing is performed, and
the film physical characteristic measuring means comprises a detector for receiving the reflected light and detecting the interference light, and light guiding means for guiding the reflected light to the detector, at least a light entry end of the light guiding means being inserted into the reaction vessel.

11. A base material processing method for carrying out film formation of a light transmissive film on a surface of a base material, or for carrying out film processing of the light transmissive film having been formed on the surface of the base material, the method comprises the steps of:
i) irradiating light from the side of the light transmissive filmtothebasematerial, which is being subjected to the film formation or the film processing,
ii) receiving reflected light of the light having been irradiated by the light irradiating means, the reflected light coming from the base material, which is being subjected to the film formation or the film processing,
iii) detecting interference light formed by interference of first reflected light and second reflected light, which are contained in the reflected light having been received, with each other, the first reflected light having been reflected from a surface of the light transmissive film, the second reflected light having been reflected from an interface between the light transmissive film and the base material,
iv) measuring a film physical characteristic of the light transmissive film, which is being subjected to the film formation or the film processing, the measurement being made by use of a peak valley technique, and
v) ceasing the film formation or the film processing at the time at which a value of the film physical characteristic having been measured has become equal to a desired value.
